# EUROPEAN PATENT SPECIFICATION

(11) **EP 3 189 215 B1**
(45) Date of publication and mention of the grant of the patent: **28.04.2021**
(21) Application number: 14767246.3
(22) Date of filing: 05.09.2014
(51) Int. Cl.: F01D 9/02, F01D 11/00, F16J 15/08

(54) **A TRANSITION-TO-TURBINE SEAL ASSEMBLY**
DICHTUNGSANORDNUNG AM ÜBERGANG ZU EINER TURBINE
ENSEMBLE DE JOINT DE TRANSITION À UNE TURBINE

(43) Date of publication of application: 12.07.2017
(73) Proprietor: Siemens Energy Global GmbH & Co. KG, 81739 München (DE)
(72) Inventor: BARTLEY, Robert H., Oviedo, Florida 32765 (US); HASE, Matthias, 45478 Mülheim (DE); WEAVER, Adam J., Oviedo, FL 32766 (US); WILLIAMS, Lashanda N., Charlotte, North Carolina 28215 (US)
(74) Representative: Isarpatent
(86) International application number: PCT/US2014/054264
(87) International publication number: WO 2016/036382

(56) References cited:
- EP-A2- 2 532 837
- JP-A- S6 030 431
- US-A1- 2012 200 046

## Description

### FIELD OF THE INVENTION

Disclosed embodiments are generally related to a combustion turbine engine, and, more particularly, to a seal assembly between a transition and a turbine of such engine, referred to herein as a transition-to-turbine seal assembly.

### BACKGROUND OF THE INVENTION

In a combustion turbine engine, such as a gas turbine engine, a number of combustion chambers combust fuel mixed with compressed air, and a hot working gas flowing from these combustion chambers is passed via respective transitions (also referred to by some in the art as ducts and tail tubes) to respective entrances of the turbine. More specifically, a plurality of combustion chambers may be arranged radially about a longitudinal axis of the turbine engine, and likewise radially arranged transitions comprise outlet ends that converge to form an annular inflow of working gas to the turbine entrance. Each transition exit is joined by a number of seals each of which bridges a gap between a portion of the exit and one or more turbine components. A number of factors --such as adjacent component growth, variances due to thermal expansion, mechanical loads, vibrational forces from combustion dynamics, etc.-- can present challenges regarding durability and performance of such seals. US 2012/200046 A1 shows a system used for sealing a gap between a single transition and a single turbine inlet or a system utilized for more than one transition. The seal assembly for a gas turbine of EP 2 532 837 A2 comprises a plurality of leaf seals with a plurality of tabs and slots in series. Furthermore, JP S60 30431 A shows a seal between a gas turbine transition piece and a turbine inlet nozzle

### SUMMARY OF THE INVENTION

According to the present invention there is provided a transition to turbine seal assembly as disclosed in claim 1.

Further embodiments are disclosed in the dependent claims.

### BRIEF DESCRIPTION OF THE DRAWINGS

The invention is explained in the following description in view of the drawings that show:
FIG. 1 is a simplified schematic of one non-limiting embodiment of a combustion turbine engine that can benefit from aspects of the present invention.
FIG. 2 is a schematic illustrating one example of a transition-to-turbine seal assembly embodying aspects of the present invention.
FIG. 3 is a schematic illustrating an embodiment according to the invention of a transition-to-turbine seal assembly embodying aspects of the present invention.
FIG. 4 is an exploded view of articulating pieces in one non-limiting embodiment of an outer diameter seal member.
FIG. 5 is a hidden-line view of an assembly of the articulating pieces shown in FIG. 4.
FIG. 6 is an exploded view of articulating pieces in one non-limiting embodiment of an inner diameter seal member.
FIG. 7 is a hidden-line view of an assembly of the articulating pieces shown in FIG. 6.
FIG. 8 is an isometric view of a plurality of a transition-to-turbine seal assemblies embodying aspects of the present invention as may be annularly interconnected to an annular array of transitions to seal an outer diameter and inner diameter of a transition-to-turbine interface.

### DETAILED DESCRIPTION OF THE INVENTION

The present inventors have recognized certain issues arising in connection with certain known transition-to-turbine seal structures that involve seal affixing with anchoring tabs arranged on neighboring transitions, and where differing motion that can arise between such neighboring transitions can result in relatively high levels of mechanical stress to the seal structures, which can lead to excessive wear and to the formation of cracks in such seal structures, and, consequently, to a shortened seal life. In view of such recognition, the present inventors propose an innovative transition-to-turbine seal assembly, where differing motion between neighboring transitions is practically decoupled, and thus, in a cost-effective manner, the proposed transition-to-turbine seal assembly is expected to result in relatively lower levels of stress to seal members, with a concomitant reduction in seal wear and cracking, which is conducive to a more reliable and longer-lasting transition-to-turbine seal assembly.

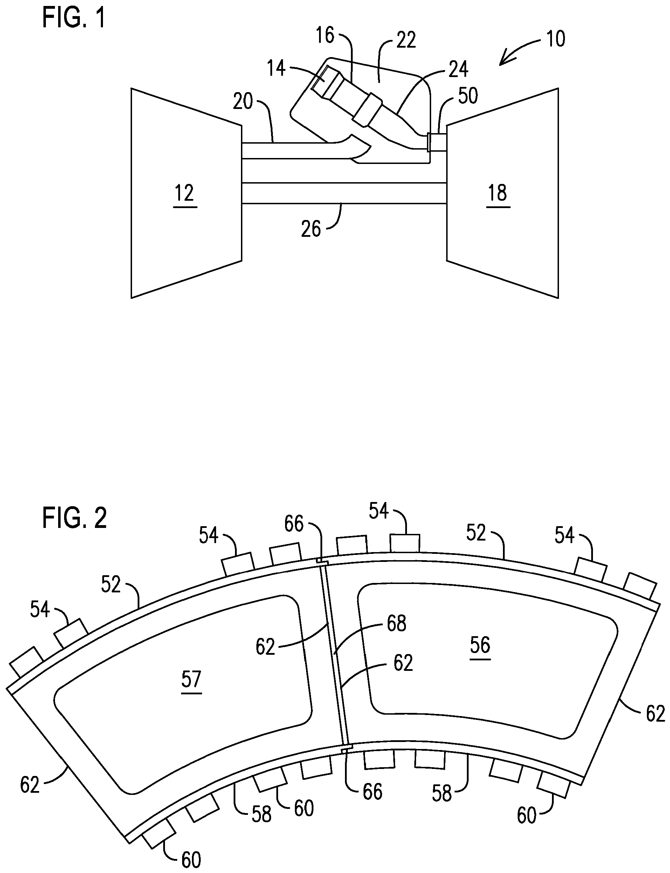

FIG. 1 is a simplified schematic of one non-limiting embodiment of a combustion turbine engine 10, such as gas turbine engine, that can benefit from aspects of the present invention. Combustion turbine engine 10 comprises a compressor 12, a combustor 14, a combustion chamber 16 (such as a can-annular type), and a turbine 18. During operation, compressor 12 takes in ambient air and provides compressed air to a diffuser 20, which passes the compressed air to a plenum 22 through which the compressed air passes to combustor 14, which mixes the compressed air with fuel, and provides combusted, hot working gas via a transition 24 to turbine 18, which can drive power-generating equipment (not shown) to generate electricity. A shaft 26 is shown connecting turbine 18 to drive compressor 12. A transition-to-turbine seal assembly 50 embodying aspects of the present invention is disposed at a junction between transition 24 and turbine 18, and is described in greater detail below.

In one example, as may be appreciated in FIG. 2, a transition-to-turbine seal assembly 50 comprises a first seal member 52, such as an outer diameter seal member, comprising one or more anchoring tabs 54 affixed only to an associated transition, such as a corresponding outer diameter section of an associated transition 56. Transition-to-turbine seal assembly 50 further comprises a second seal member 58, such as inner diameter seal member, comprising one or more anchoring tabs 60 affixed only to associated transition 56, such as an inner diameter section of an associated transition 56.

That is, opposite to certain prior art seal structures that involve affixing by way of anchoring tabs arranged on neighboring transitions, seal members 52, 58 do not involve anchoring tabs arranged on two or more neighboring transitions, such as neighboring transitions 56 and 57. In prior art seal structures that involve affixing with anchoring tabs arranged on neighboring transitions, differing motion that can arise between such neighboring transitions can result in relatively high levels of mechanical stress to the seal structures, which can lead to excessive wear and to the formation of cracks in such jointly anchored structures, and, consequently, to a shortened seal life.

Since in this presently disclosed example, seal members 52, 58 are not affixed to neighboring transitions, such as neighboring transition 57, but, for example, only to the associated transition 56, any differing motion between neighboring transitions 56 and 57 is practically no longer a factor and this is expected to result in relatively lower levels of stress to seal members 52, 58, and a concomitant reduction in seal wear and cracking, which is conducive to a relatively longer-lasting and more reliable transition-to-turbine seal assembly 50.

In one example, as may be appreciated in FIG. 2, outer diameter seal member 52 and inner diameter seal member 58 are positioned to respectively extend between mutually opposed sides 62 of associated transition 56. In this example, respective ends of seal member 52 and second seal member 58 may comprise a shiplap (e.g., overlapping) joint 66 positioned at a gap 68 between neighboring transitions 56, 57 effective for annularly interconnecting the respective seal members associated with such neighboring transitions. That is, effective for annularly interconnecting outer diameter seam member 52 in transition 56 to an adjacent outer diameter seam member 52 in transition 57; or, similarly, effective for annularly interconnecting inner diameter seam member 58 in transition 56 to an adjacent inner diameter seam member 58 in transition 57.

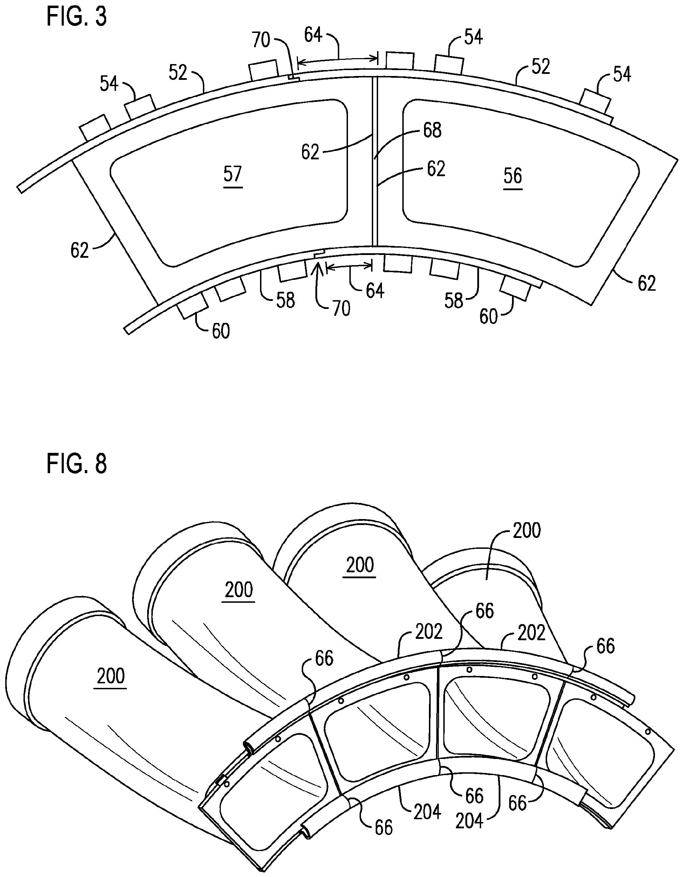

In an embodiment according to the invention, as may be appreciated in FIG. 3, outer diameter seal member 52 and inner diameter seal member 58 --respectively affixed only to transition 56 by way of anchoring tabs 54 and 60-- may further comprise respective seal member portions, schematically represented by line 64, that span a corresponding portion of neighboring transition 57, where seal member portion 64 is free from anchoring with respect to neighboring transition 57. A respective shiplap joint 70 at the end of seal member portions 64 may be used for annularly interconnecting the seals associated with such neighboring transitions.

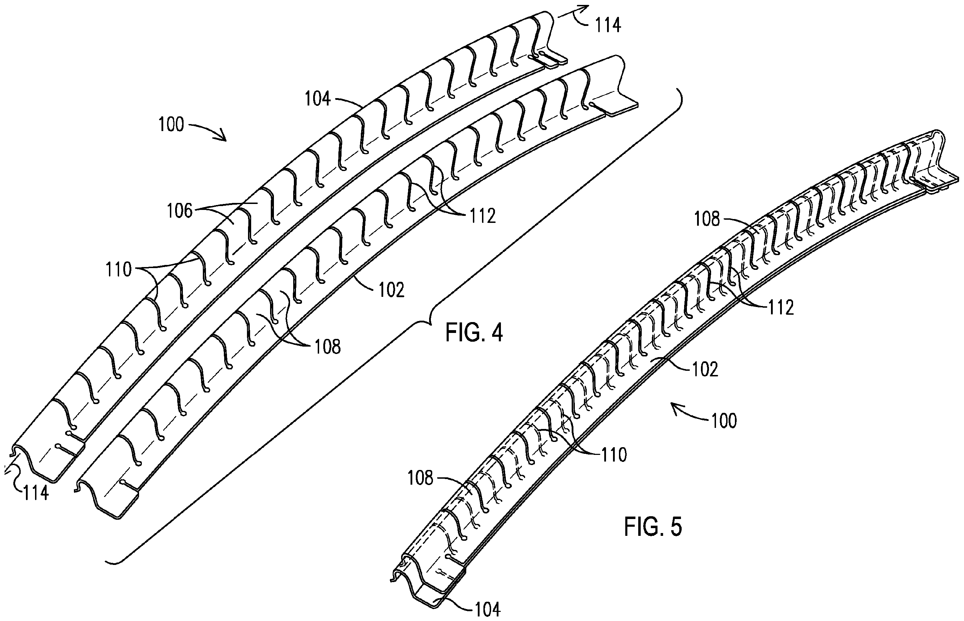

FIG. 4 is an exploded view of articulating pieces of a first seal member 100, such as an outer diameter seal member, comprising an outer piece 102 to be superimposed on an inner piece 104, as may be appreciated in the hidden line view shown in FIG. 5. Outer piece 102 and inner piece 104 each comprises a respective plurality of articulating segments 108, 106 disposed between respective pluralities of flexible joints 112, 110, such as slits, arranged to provide a degree of freedom to first seal member 100 along a first axis 114 (FIG. 5) that in one non-limiting embodiment extends along a circumferential direction.

The respective pluralities of flexible joints 112, 110 in outer piece 102 and inner piece 104 each comprises a respective plurality of slits arranged in a non-coinciding pattern with respect to one another when outer piece 102 is superimposed on inner piece 104, as may be appreciated in FIG. 5. It will be appreciated that the non-coinciding arrangement between the respective slits in outer piece 102 and inner piece 104 is effective to improve the sealing functionality while providing enhanced flexibility conducive to relatively lower levels of stress to the seal members. It will be appreciated that the number and spacing between the slits may be tailored based on the needs of a given application, such as involving the structural and/or sealing performance of the seal members. Accordingly, the slit arrangements illustrated in the figures should be construed in an example sense and not in a limiting sense. It will be further appreciated that the articulating pieces may be manufactured in a practically straight shape, and then, during an installation stage, the articulating pieces could be manipulated to a desired shape, as may include imparting a desired degree of curvature to a plurality of seal members made up of such articulating pieces to form in combination an annular seal.

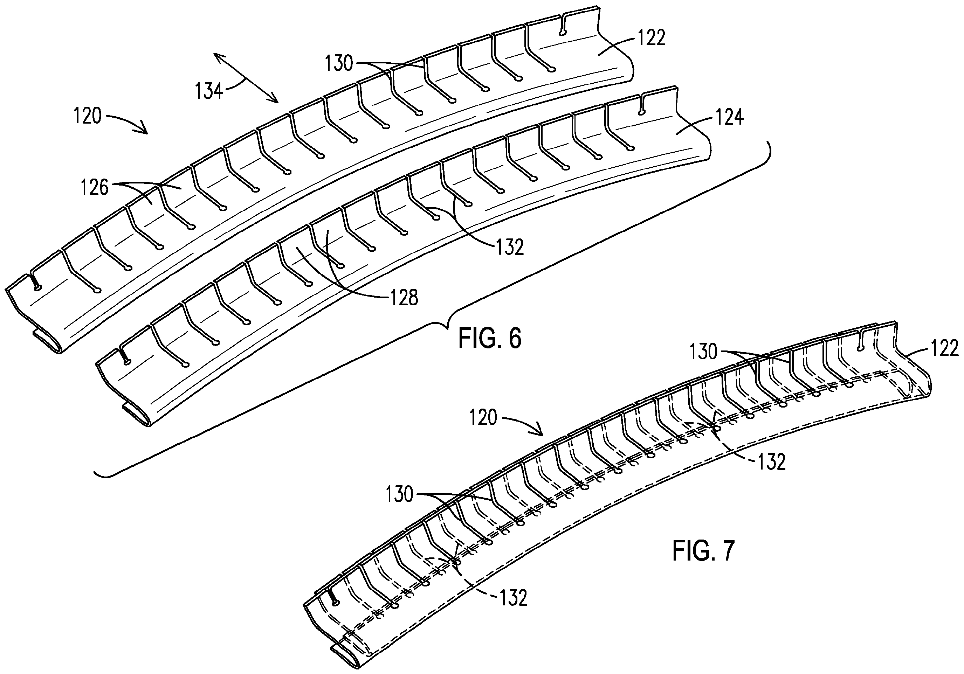

FIG. 6 is an exploded view of articulating pieces in a second seal member 120, such as an inner diameter seal member, comprising an outer piece 122 to be superimposed on an inner piece 124, as may be appreciated in the hidden line view shown in FIG. 7. Outer piece 122 and inner piece 124 each comprises a respective plurality of articulating segments 126, 128 disposed between respective pluralities of flexible joints 130, 132, such as slits, arranged to provide a degree of freedom to second seal member 120 along a second axis 134 that in one non-limiting embodiment extends along an axial direction. The respective pluralities of flexible joints 130, 132 in outer piece 122 and inner piece 124 each comprises a respective plurality of slits arranged in a non-coinciding pattern with respect to one another when outer piece 122 is superimposed on inner piece 124, as may be appreciated in FIG. 7.

FIG. 8 is an isometric view of one non-limiting embodiment of a plurality of transition-to-turbine seal assemblies comprising outer diameter seal members 202 and inner diameter seal members 204 embodying aspects of the present invention, as may be annularly interconnected to an annular array of transitions 200 to seal an outer diameter and inner diameter of a transition-to-turbine interface. It will be appreciated that seal members 202 and 204 may comprise: members affixed only to an associated transition (not affixed to neighboring transitions), as disclosed in the context of FIGs 2-3; articulating pieces as disclosed in the context of FIGs. 4-7; or combinations of such members. For example, it is envisioned that in one non-limiting embodiment the enhanced seal flexibility achieved with the articulating pieces can provide an effective and thorough sealing functionality, even at seal locations not expected to do so, such as the shiplap joints positioned at the gaps between neighboring transitions.

While various embodiments of the present invention have been shown and described herein, it will be apparent that such embodiments are provided by way of example only. Numerous variations, changes and substitutions may be made without departing from the invention herein. Accordingly, it is intended that the invention be limited only by the scope of the appended claims.

## Claims

1. A transition-to-turbine seal assembly (50) comprising:
an outer diameter seal member (52, 100) comprising at least one anchoring tab (54) affixed only to an associated transition; and
an inner diameter seal member (58, 120) comprising at least one anchoring tab (54) affixed only to the associated transition,
wherein the outer diameter seal member (52, 100) and the inner diameter seal member (58, 120) are positioned to respectively extend between mutually opposed sides of the associated transition,
wherein at least one of the outer diameter seal member (52) and the inner diameter seal member (58) comprises a seal member portion (64) that spans a corresponding portion of a neighboring transition, wherein the seal member portion (64) is free from anchoring with respect to the neighboring transition,
wherein respective ends of the outer diameter seal member (52) and the inner diameter seal member (58) comprise a shiplap joint (70) positioned intermediate neighboring transitions.

2. The transition-to-turbine seal assembly (50) of claim 1, wherein the outer diameter seal (52, 100) comprises an outer piece (102) superimposed on an inner piece (104), wherein the outer piece (102) and the inner piece (104) each comprises a respective plurality of articulating segments (108, 106) arranged between respective pluralities of flexible joints (110, 112) to provide a degree freedom to the outer diameter seal member along a first axis (114).

3. The transition-to-turbine seal assembly (50) of claim 2, wherein the respective pluralities of flexible joints (110, 112) in the outer piece (102) and the inner piece (104) each comprises a respective plurality of slits arranged in a non-coinciding pattern with respect to one another when the outer piece (102) is superimposed on the inner piece (104).

4. The transition-to-turbine seal assembly (50) of claim 3, wherein the inner diameter seal member (58, 120) comprises an outer piece (122) superimposed on an inner piece (124), wherein the outer piece (122) and the inner piece (124) each comprises a respective plurality of articulating segments (108, 106) arranged between respective pluralities of flexible joints to provide a degree of freedom to the inner diameter seal member along a second axis (134),
wherein the first axis (114) extends along a circumferential direction and the second axis (134) extends along an axial direction.

## Patentansprüche

1. Dichtungsanordnung (50) am Übergang zu einer Turbine, umfassend:
ein Außendurchmesser-Dichtungsglied (52, 100), das mindestens eine Verankerungslasche (54) umfasst, die lediglich an einem zugeordneten Übergang befestigt ist, und
ein Innendurchmesser-Dichtungsglied (58, 120), das mindestens eine Verankerungslasche (54) umfasst, die lediglich an einem zugeordneten Übergang befestigt ist,
wobei das Außendurchmesser-Dichtungsglied (52, 100) und das Innendurchmesser-Dichtungsglied (58, 120) so positioniert sind, dass sie sich jeweils zwischen einander gegenüberliegenden Seiten des zugeordneten Übergangs erstrecken,
wobei das Außendurchmesser-Dichtungsglied (52) und/oder das Innendurchmesser-Dichtungsglied (58) einen Dichtungsgliedabschnitt (64) umfassen, der einen entsprechenden Abschnitt eines benachbarten Übergangs überspannt, wobei der Dichtungsgliedabschnitt (64) bezüglich des benachbarten Übergangs keine Verankerung aufweist,
wobei jeweilige Enden des Außendurchmesser-Dichtungsglieds (52) und des Innendurchmesser-Dichtungsglieds (58) eine Überfalzungsverbindung (70) umfassen, die zwischen benachbarten Übergängen positioniert ist.

2. Dichtungsanordnung (50) am Übergang zu einer Turbine nach Anspruch 1, wobei die Außendurchmesser-Dichtung (52, 100) ein äußeres Teil (102) umfasst, das über ein inneres Teil (104) platziert ist, wobei das äußere Teil (102) und das innere Teil (104) jeweils eine jeweilige Vielzahl von Gelenksegmenten (108, 106) umfassen, die zwischen jeweiligen Vielzahlen von flexiblen Gelenken (110, 112) angeordnet sind, um dem Außendurchmesser-Dichtungsglied einen Freiheitsgrad entlang einer ersten Achse (114) bereitzustellen.

3. Dichtungsanordnung (50) am Übergang zu einer Turbine nach Anspruch 2, wobei die jeweiligen Vielzahlen von flexiblen Gelenken (110, 112) in dem äußeren Teil (102) und dem inneren Teil (104) jeweils eine jeweilige Vielzahl von Schlitzen umfassen, die in einem nicht zusammenfallenden Muster bezüglich einander angeordnet sind, wenn das äußere Teil (102) über dem inneren Teil (104) platziert ist.

4. Dichtungsanordnung (50) am Übergang zu einer Turbine nach Anspruch 3, wobei das Innendurchmesser-Dichtungsglied (58, 120) ein äußeres Teil (122) umfasst, das über ein inneres Teil (124) platziert ist, wobei das äußere Teil (122) und das innere Teil (124) jeweils eine jeweilige Vielzahl von Gelenksegmenten (108, 106) umfassen, die zwischen jeweiligen Vielzahlen von flexiblen Gelenken angeordnet sind, um dem Innendurchmesser-Dichtungsglied einen Freiheitsgrad entlang einer zweiten Achse (134) bereitzustellen,
wobei sich die erste Achse (114) entlang einer Umfangsrichtung erstreckt und sich die zweite Achse (134) entlang einer axialen Richtung erstreckt.

## Revendications

1. Ensemble (50) de joint de transition à une turbine, comprenant :
un organe de joint de diamètre extérieur (52, 100) comprenant au moins une languette d'ancrage (54) fixée seulement à une transition associée ; et
un organe de joint de diamètre intérieur (58, 120) comprenant au moins une languette d'ancrage (54) fixée seulement à la transition associée,
l'organe de joint de diamètre extérieur (52, 100) et l'organe de joint de diamètre intérieur (58, 120) étant positionnés de manière à s'étendre respectivement entre des côtés mutuellement opposés de la transition associée, au moins l'un parmi l'organe de joint de diamètre extérieur (52) et l'organe de joint de diamètre intérieur (58) comprenant une portion d'organe de joint (64) qui couvre une portion correspondante d'une transition adjacente, la portion d'organe de joint (64) étant dépourvue d'ancrage par rapport à la transition adjacente, des extrémités respectives de l'organe de joint de diamètre extérieur (52) et de l'organe de joint de diamètre intérieur (58) comprenant une jointure à clin (70) positionnée entre les transitions adjacentes.

2. Ensemble (50) de joint de transition à une turbine selon la revendication 1, dans lequel le joint de diamètre extérieur (52, 100) comprend une pièce extérieure (102) superposée à une pièce intérieure (104), la pièce extérieure (102) et la pièce intérieure (104) comprenant chacune une pluralité respective de segments d'articulation (108, 106) agencés entre des pluralités respectives de jointures flexibles (110, 112) pour fournir un degré de liberté à l'organe de joint de diamètre extérieur le long d'un premier axe (114).

3. Ensemble (50) de joint de transition à une turbine selon la revendication 2, dans lequel les pluralités respectives de jointures flexibles (110, 112) dans la pièce extérieure (102) et la pièce intérieure (104) comprennent chacune une pluralité respective de fentes agencées suivant un motif sans coïncidence les unes avec les autres lorsque la pièce extérieure (102) est superposée à la pièce intérieure (104) .

4. Ensemble (50) de joint de transition à une turbine selon la revendication 3, dans lequel l'organe de joint de diamètre intérieur (58, 120) comprend une pièce extérieure (122) superposée à une pièce intérieure (124), la pièce extérieure (122) et la pièce intérieure (124) comprenant chacune une pluralité respective de segments d'articulation (108, 106) agencés entre des pluralités respectives de jointures flexibles pour fournir un degré de liberté à l'organe de joint de diamètre intérieur le long d'un deuxième axe (134),
le premier axe (114) s'étendant le long d'une direction circonférentielle et le deuxième axe (134) s'étendant le long d'une direction axiale.
